(19) **Europäisches Patentamt / European Patent Office / Office européen des brevets**

(11) **EP 0 925 485 B1**

(12) # EUROPÄISCHE PATENTSCHRIFT

(45) Veröffentlichungstag und Bekanntmachung des Hinweises auf die Patenterteilung:
**23.03.2011 Patentblatt 2011/12**

(51) Int Cl.:
*G01D 3/08* *(2006.01)*     *G01D 18/00* *(2006.01)*
*G01P 21/02* *(2006.01)*     *B60T 8/00* *(2006.01)*

(21) Anmeldenummer: **98933494.1**

(22) Anmeldetag: **09.05.1998**

(86) Internationale Anmeldenummer:
**PCT/DE1998/001300**

(87) Internationale Veröffentlichungsnummer:
**WO 1999/001719 (14.01.1999 Gazette 1999/02)**

(54) **VERFAHREN UND VORRICHTUNG ZUR ÜBERWACHUNG VON SENSOREN IN EINEM FAHRZEUG**

METHOD AND DEVICE FOR MONITORING SENSORS IN A VEHICLE

PROCEDE ET DISPOSITIF POUR LE CONTROLE DE DETECTEURS DANS UN VEHICULE

(84) Benannte Vertragsstaaten:
**DE FR GB IT**

(30) Priorität: **02.07.1997 DE 19728097**
**31.10.1997 DE 19748126**

(43) Veröffentlichungstag der Anmeldung:
**30.06.1999 Patentblatt 1999/26**

(73) Patentinhaber: **ROBERT BOSCH GMBH**
**70442 Stuttgart (DE)**

(72) Erfinder:
• **MERGENTHALER, Rolf-Hermann**
**D-71229 Leonberg (DE)**
• **URBAN, Werner**
**D-71665 Vaihingen (DE)**

(56) Entgegenhaltungen:
**EP-A- 0 427 909     WO-A-98/10297**
**DE-A- 19 525 217**

• **"NORMALIZED MEASUREMENT COMPARISON (NMC) MEANS FOR AUTOMOTIVE POWERTRAIN (PT)/-CHASSIS (CH) SYSTEMS' ANGULAR SPEED SENSOR AND/OR PT MECHANICAL SLIP DIAGNOSTICS" RESEARCH DISCLOSURE, Nr. 352, 1. August 1993, Seite 504 XP000395236**
• **ZANTEN VAN A ET AL: "FDR - DIE FAHRDYNAMIK-REGELUNG VON BOSCH" ATZ AUTOMOBILTECHNISCHE ZEITSCHRIFT, Bd. 96, Nr. 11, 1. November 1994, Seiten 674-678, 683 - 689, XP000478694 in der Anmeldung erwähnt**

**Beschreibung**

Stand der Technik

Die Erfindung betrifft eine Vorrichtung und ein Verfahren zur Überwachung von in einem Fahrzeug eingesetzten Sensoren. Insbesondere dient die Vorrichtung bzw. das Verfahren der Überwachung der Sensoren, die in einem System zur Regelung der Fahrdynamik eines Fahrzeuges eingesetzt werden.

Vorrichtungen und Verfahren zur Überwachung von in einem Fahrzeug eingesetzten Sensoren sind aus dem Stand der Technik in vielerlei Modifikationen bekannt.

Die unter dem Aktenzeichen P 196 36 443 beim Deutschen Patentamt eingereichte Patentanmeldung beschreibt ein Verfahren und eine Vorrichtung zur Überwachung von Sensoren in einem Fahrzeug. Bei diesem Verfahren bzw. bei dieser Vorrichtung werden Sensoren überwacht, die jeweils unterschiedliche physikalische Größen repräsentieren. Die Vorrichtung enthält Mittel, mit denen für wenigstens zwei Sensoren, ausgehend von wenigstens den von ihnen erzeugten Signalen, für die Sensoren gleich definierte Vergleichsgrößen ermittelt werden. Ferner enthält die Vorrichtung weitere Mittel, mit denen in Abhängigkeit von wenigstens den ermittelten Ver gleichsgrößen eine Referenzgröße ermittelt wird. Ausgehend von dieser Referenzgröße wird für die einzelnen Sensoren jeweils eine Sensorreferenzgröße ermittelt. Unter Berücksichtigung der Sensorreferenzgrößen wird für die Sensoren jeweils eine Überwachung und/oder eine Korrektur durchgeführt. Der Schrift ist für die Ermittlung der Referenzgröße folgende Vorgehensweise zu entnehmen:

Ausgehend von den gleich definierten Vergleichsgrößen wird durch einen Vergleich dieser Vergleichsgrößen eine Referenzgröße ermittelt. Zur Ermittlung der Referenzgröße wird zunächst diejenige Vergleichsgröße ermittelt, die den größten Abstand zu der zuletzt ermittelten Referenzgröße aufweist.

Da diese Vergleichsgröße den größten Abstand zu der zuletzt ermittelten Referenzgröße aufweist, kann darauf geschlossen werden, daß unter Umständen der zugehörige Sensor eventuell fehlerhaft ist. Folglich bleibt diese Vergleichsgröße bei der Ermittlung der aktuellen Referenzgröße unberücksichtigt.

Die aktuelle Referenzgröße wird durch Bildung eines gewichteten Mittelwertes gebildet. In die Bildung des gewichteten Mittelwertes gehen zum einen die verbleibenden Vergleichsgrößen und zum anderen die zwischen den verbleibenden Vergleichsgrößen vorhandenen Abstände ein.

Systeme zur Regelung der Fahrdynamik eines Fahrzeuges sind beispielsweise aus der in der Automobiltechnischen Zeitschrift (ATZ) 16, 1994, Heft 11, auf den Seiten 674 bis 689 erschienen Veröffentlichung "FDR - die Fahrdynamikregelung von Bosch" bekannt.

Die Aufgabe der vorliegenden Erfindung besteht darin, die Überwachung von in einem Fahrzeug eingesetzten Sensoren zu verbessern.

Diese Aufgabe wird durch die Merkmale des Anspruchs 1 und durch die des Anspruchs 5 gelöst.

Vorteile der Erfindung

Mit der Vorrichtung werden Sensoren überwacht, die Signale erzeugen, welche jeweils unterschiedliche physikalische Größen repräsentieren. Dabei werden vorteilhafterweise für wenigstens zwei Sensoren, ausgehend von wenigstens den von ihnen erzeugten Signalen, für die Sensoren gleich definierte Vergleichsgrößen ermittelt. Vorteilhafterweise wird ausgehend von wenigstens zwei der gleich definierten Vergleichsgrößen eine Referenzgröße ermittelt wird, die bei einer für wenigstens einen Sensor stattfindenden Überwachung berücksichtigt wird.

Zur Bildung der Referenzgröße wird vorteilhafterweise für jede der wenigstens zwei gleich definierten Vergleichsgrößen eine Größe ermittelt wird, die den Abstand der gleich definierten Vergleichsgröße zu den anderen gleich definierten Vergleichsgrößen der wenigstens zwei gleich definierten Vergleichsgrößen beschreibt. Dabei wird die gleich definierte Vergleichsgröße mit dieser Größe bewertet.

Von besonderem Vorteil ist es, wenn die ermittelten, gleich definierten Vergleichsgrößen, eine physikalische Größe repräsentieren, die vorzugsweise einer, mit einem der im Fahrzeug enthaltenen Sensoren erfaßten Größe, insbesondere einer Giergeschwindigkeit, entspricht.

Vorteilhafterweise werden ausgehend von einem Teil der mit Hilfe der Sensoren erzeugten Signale, welche jeweils unterschiedliche physikalische Größen repräsentieren, eine die Fahrzeuggeschwindigkeit repräsentierende Größe ermittelt. Ausgehend von dieser die Fahrzeuggeschwindigkeit repräsentierenden Größe und der Referenzgröße wird für wenigstens einen Sensor eine Sensorreferenzgröße ermittelt wird, die bei der Überwachung des wenigstens einen Sensors berücksichtigt wird.

Von besonderem Vorteil ist es, wenn für wenigstens einen Sensor eine Korrektur des von ihm erzeugten Signals wenigstens ausgehend von seiner Sensorreferenzgröße und dem von ihm erzeugten Signal durchgeführt wird.

Für ein Fahrzeug, welches als Sensoren Raddrehzahlsensoren, einen Drehraten- bzw. Gierratensensor, einen Querbeschleunigungssensor und einen Lenkwinkelsensor aufweist, wird die Referenzgröße vorteilhafterweise wie folgt ermittelt:

für die Raddrehzahlsensoren wird wenigstens ausgehend von der die Fahrzeuggeschwindigkeit repräsentierenden Größe und den von ihnen erzeugten Signalen eine gleich definierte Vergleichsgröße omeganij ermittelt,

für den Drehraten- bzw. Gierratensensor wird wenigstens ausgehend von dem von ihm erzeugten Signal und seiner Sensorreferenzgröße eine gleich definierte Vergleichsgröße omegakorr ermittelt,

für den Querbeschleunigungssensor wird wenigstens ausgehend von dem von ihm erzeugten Signal, der die Fahrzeuggeschwindigkeit repräsentierenden Größe und seiner Sensorreferenzgröße eine gleich definierte Vergleichsgröße omegaay ermittelt,

für den Lenkwinkelsensor wird wenigstens ausgehend von dem von ihm erzeugten Signal, der die Fahrzeuggeschwindigkeit repräsentierenden Größe und seiner Sensorreferenzgröße eine gleich definierte Vergleichsgröße omegadelta wird, und die Referenzgröße wird gemäß der Beziehung

$$omegaref = \frac{\dfrac{omegakorr}{D12 \cdot D13 \cdot D14} + \dfrac{omegadelta}{D12 \cdot D23 \cdot D24} + \dfrac{omeganij}{D13 \cdot D23 \cdot D34} + \dfrac{omegaay}{D14 \cdot D24 \cdot D34}}{\dfrac{1}{D12 \cdot D13 \cdot D14} + \dfrac{1}{D12 \cdot D23 \cdot D24} + \dfrac{1}{D13 \cdot D23 \cdot D34} + \dfrac{1}{D14 \cdot D24 \cdot D34}}$$

ermittelt wird, wobei die Ausdrücke

D12 = |omegakorr - omegadelta|, D13 = |omegakorr - omeganij|,
D14 = |omegakorr - omegaay|, D23 = |omegadelta - omeganij|,
D24 = |omegadelta - omegaay| und D34 = |omeganij - omegaay|

die Abstände jeweils zweier gleich definierter Vergleichsgrößen beschreiben.

Ein weitere Vorteil des erfindungsgemäßen Verfahrens bzw. der erfindungsgemäßen Vorrichtung ergibt sich aus der Robustheit der Referenzgröße. Ferner weist die Sensorreferenzgröße keine Sprünge auf.

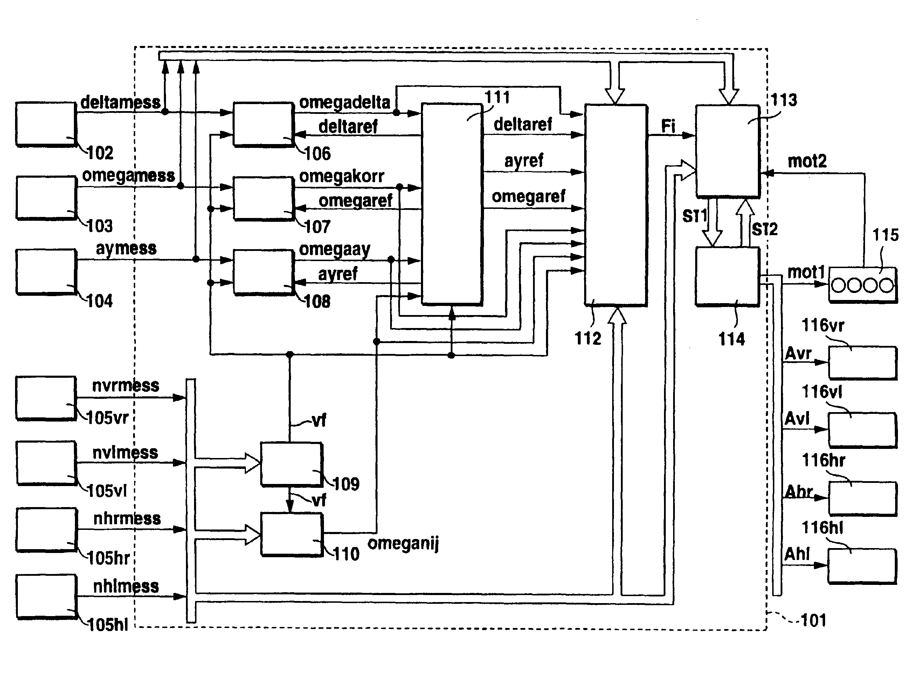

Weitere vorteilhafte Ausgestaltungen der Erfindung können den Unteransprüchen und der Zeichnung entnommen werden.

Zeichnung

Die Zeichnung besteht aus einer Figur, die den Aufbau der erfindungsgemäßen Vorrichtung zur Durchführung des erfindungsgemäßen Verfahrens zeigt.

Ausführungsbeispiel

Die Erfindung soll nun anhand der Figur beschrieben werden.

Die spezielle Form des gewählten Ausführungsbeispiels - der Einsatz der erfindungsgemäßen Vorrichtung bzw. des erfindungsgemäßen Verfahrens in einem System zur Regelung der Fahrdynamik eines Fahrzeuges - soll keine Einschränkung der erfindungsgemäßen Idee darstellen.

In der Figur stellt der Block 101 ein Steuergerät dar, welches in der erfindungsgemäßen Vorrichtung zur Durchführung des erfindungsgemäßen Verfahrens zum Einsatz kommt.

Mit 102 ist ein Lenkwinkelsensor bezeichnet, mit dem eine den am Fahrzeug eingestellten Lenkwinkel beschreibende Größe deltamess erfaßt werden kann. Das mit Hilfe des Lenkwinkelsensor 102 erzeugte Signal deltamess wird sowohl einem Block 106 als auch den Blöcken 112 bzw. 113 zugeführt. Mit Hilfe eines Drehraten- bzw. Gierratensensors 103 wird eine die Gierbewegung des Fahrzeuges um seine Hochachse beschreibende Größe erfaßt. Das mit Hilfe des Drehraten- bzw. Gierratensensors 103 erfaßte Signal omegamess wird sowohl einem Block 107 als auch den Blöcken 112 bzw. 114 zugeführt. Mit einem Querbeschleunigungssensor 104 wird eine die am Fahrzeug angreifende Querbeschleunigung beschreibende Größe erfaßt. Das mit Hilfe des Querbeschleunigungssensors 104 erzeugte Signal aymess wird den Blöcken 108, 112 sowie 114 zugeführt. Die Blöcke 105vr, 105vl, 105hr bzw. 105hl stellen den Rädern des Fahrzeuges zugeordnete Raddrehzahlsensoren dar. Nachfolgend wird für die Raddrehzahlsensoren die vereinfachende Schreibweise 105ij eingeführt. Dabei gibt der Index i an, ob sich das Rad an der Hinterachse (h) oder an der Vorderachse (v) befindet. Der Index j zeigt die Zuordnung zur rechten (r) bzw. zur linken (1) Fahrzeugseite an. Diese Kennzeichnung durch die beiden Indizes i bzw. j ist für sämtliche Größen bzw. Komponenten, bei denen sie Verwendung findet, entsprechend. Die mit Hilfe der Raddrehzahlsensoren 105ij erzeugten Signale nijmess werden den Blöcken 109, 110 sowie 112 bzw. 113 zugeführt.

Ausgehend von den mit den Raddrehzahlsensoren 10Sij erzeugten Signalen nijmess wird in einem Block 109 eine die Fahrzeuggeschwindigkeit beschreibende Größe vf erzeugt. Diese die Fahrzeuggeschwindigkeit beschreibende Größe vf wird ausgehend vom Block 109 den Blöcken 106, 108, 110 sowie den Blöcken 111 bzw. 112 zugeführt. Optional kann die Größe vf auch dem Block 107 zugeführt werden.

In den Blöcken 106, 107, 108 sowie 110 werden für die Sensoren 102, 103, 104 sowie 105ii gleich definierte Vergleichsgrößen ermittelt. Im vorliegenden Ausführungsbeispiel sei angenommen, daß die für die Sensoren gleich definierten Vergleichsgrößen als physikalische Größe eine Giergeschwindigkeit repräsentieren.

In einem Block 106 wird ausgehend von dem ihm zugeführten Signal deltamess, sowie der die Fahrzeuggeschwindigkeit beschreibenden Größe vf, sowie der ihm zugeführten Größe deltaref eine gleich definierte Vergleichsgröße omegadelta ermittelt. Die gleich definierte Vergleichsgröße omegadelta wird ausgehend vom Block 106 den Blöcken 111 bzw. 112 zugeführt. Die Ermittlung der gleich definierten Vergleichsgröße omegadelta läuft im Block 106 beispielsweise folgendermaßen ab:

Zunächst wird ausgehend von dem Signal deltamess, von der die Fahrzeuggeschwindigkeit beschreibenden Größe vf sowie einem Signal deltaref, welches einen Referenzwert, die sogenannte Sensorreferenzgröße, für den mit Hilfe des Lenkwinkelsensors 102 erfaßten Lenkwinkel, beschreibt, ein Offsetwert für das Signal deltamess ermittelt. Ausgehend von dem ermittelten Offsetwert wird das Signal deltamess korrigiert.

Aus dem korrigierten Signal wird mit Hilfe eines mathematischen Modells unter Berücksichtigung der die Fahrzeuggeschwindigkeit beschreibenden Größe vf die gleich definierte Vergleichsgröße omegadelta ermittelt.

Im Block 108 läuft die Ermittlung der gleich definierten Vergleichsgröße omegaay ausgehend von den ihm zugeführten Signalen aymess, vf sowie ayref entsprechend der Ermittlung der gleich definierten Vergleichsgröße omegadelta im Block 106 ab. Die gleich definierte Vergleichsgröße omegaay wird sowohl einem Block 111 als auch einem Block 112 zugeführt.

Da wie bereits erwähnt, die für die Sensoren gleich definierten Vergleichsgrößen als physikalische Größe eine Giergeschwindigkeit repräsentieren, entspricht die im Block 107 ermittelte gleich definierte Vergleichsgröße omegakorr dem offsetkorrigierten Signal omegamess, da in diesem Fall eine Umrechnung des offsetkorrigierten Sensorsignals mit Hilfe eines mathematischen Modells in eine Giergeschwindigkeit nicht erforderlich ist. Wie bereits im Zusammenhang mit den Blöcken 106 bzw. 108 beschrieben, wird im Block 107, ausgehend von dem Signal omegamess sowie der Größe omegaref ein Offsetwert für das Signal omegamess ermittelt. Mit Hilfe dieses Offsetwertes wird die gleich definierte Vergleichsgröße omegakorr aus dem Signal omegamess berechnet. Die Größe omegakorr wird einem Block 111 und einem Block 112 zugeführt.

Für den Fall, daß die für die Sensoren gleich definierten Vergleichsgrößen als physikalische Größe eine andere Größe als die Giergeschwindigkeit repräsentieren, ist auch im Block 107 eine Umrechnung des offsetkorrigierten Signals mit Hilfe eines mathematischen Modells erforderlich. Aus diesem Grund ist die Zuführung der die Fahrzeuggeschwindigkeit beschreibenden Größe vf an dem Block 107 angedeutet.

In einem Block 110 wird ausgehend von den mit Hilfe der Raddrehzahlsensoren 105ij erzeugten Signale nijmess sowie der die Fahrzeuggeschwindigkeit repräsentierenden Größe vf für die Raddrehzahlsensoren 105ij eine gleich definierte Vergleichsgröße omeganij ermittelt. Die gleich definierte Vergleichsgröße omeganij wird ausgehend vom Block 110 den Blöcken 111 bzw. 112 zugeführt.

Im Block 111 finden zwei Abläufe statt. Zum einen wird im Block 111 ausgehend von den ihm zugeführten gleich definierten Vergleichsgrößen omegadelta, omegakorr, omegaay bzw. omeganij, eine Referenzgröße omegaref ermittelt.

Zur Ermittlung der Referenzgröße bietet sich die Bildung folgenden gewichteten Mittels an:

$$\text{omegaref} = \frac{\dfrac{\text{omegakorr}}{D12 \cdot D13 \cdot D14} + \dfrac{\text{omegadelta}}{D12 \cdot D23 \cdot D24} + \dfrac{\text{omeganij}}{D13 \cdot D23 \cdot D34} + \dfrac{\text{omegaay}}{D14 \cdot D24 \cdot D34}}{\dfrac{1}{D12 \cdot D13 \cdot D14} + \dfrac{1}{D12 \cdot D23 \cdot D24} + \dfrac{1}{D13 \cdot D23 \cdot D34} + \dfrac{1}{D14 \cdot D24 \cdot D34}}$$

(1),

mit

$$D12 = |omegakorr - omegadelta| \qquad (2),$$

$$D13 = |omegakorr - omeganij| \qquad (3),$$

$$D14 = |omegakorr - omegaay| \qquad (4),$$

$$D23 = |omegadelta - omeganij| \qquad (5),$$

$$D24 = |omegadelta - omegaay| \qquad (6),$$

$$D34 = |omeganij - omegaay| \qquad (7).$$

Wie obige Beziehung (1) zeigt, wird für jede der gleich definierten Vergleichsgrößen eine Größe ermittelt, die den Anstand dieser gleich definierten Vergleichsgröße zu den anderen gleich definierten Vergleichsgrößen beschreibt.

In den ersten Term des Zählers, der für die gleich definierte Vergleichsgröße omegakorr gebildet wird, gehen die Abstände der Größe omegakorr zu den Größen omegadelta, omeganij und omegaay ein. In den zweiten Term des Zählers, der für die gleich definierte Vergleichsgröße omegadelta gebildet wird, gehen die Abstände der Größe omegadelta zu den Größen omegakorr, omeganij und omegaay ein. In den dritten Term des Zählers, der für die gleich definierte Vergleichsgröße omeganij gebildet wird, gehen die Abstände der Größe omeganij zu den Größen omegakorr, omegadelta und omegaay ein. In den vierten Term des Zählers, der für die gleich definierte Vergleichsgröße omegaay gebildet wird, gehen die Abstände der Größe omegaay zu den Größen omegakorr, omegadelta und omegnij ein.

Das Gewichtungsverfahren gemäß dem obigen Ansatz ist so gewählt, daß wenn die gleich definierten Vergleichsgrößen paarweise äquidistant liegen, sich genau das arithmetische Mittel aus diesen gleich definierten Vergleichsgrößen ergibt. Ferner ist sichergestellt, daß wenn beispielsweise im vorliegenden Ausführungsbeispiel zwei der vier gleich definierten Vergleichsgrößen zusammenfallen, auch die Referenzgröße omegaref diesen Wert annimmt.

Zum anderen werden im Block 111 Sensorreferenzgrößen für die Sensoren 102, 103 bzw. 104 ermittelt. Ausgehend von der Referenzgröße omegaref und unter Berücksichtigung der die Fahrzeuggeschwindigkeit beschreibenden Größe vf werden diese Sensorreferenzgrößen mit Hilfe von diversen mathematischen Modellen ermittelt. Für den Sensor 102, den Lenkwinkelsensor, wird die Sensorreferenzgröße deltaref ermittelt, die ausgehend vom Block 111 dem Block 106 und dem Block 112 zugeführt wird. Für den Sensor 103, dem Drehraten- bzw. Gierratensensor wird die Sensorreferenzgröße omegaref verwendet, die ausgehend vom Block 111 dem Block 107 und dem Block 112 zugeführt wird. Für den Sensor 104, den Querbeschleunigungssensor, wird die Sensorreferenzgröße ayref ermittelt, die ebenfalls ausgehend vom Block 111 dem Block 108 und dem Block 112 zugeführt wird. Die Ermittlung von ayref läuft entsprechend der von deltaref ab.

Im Block 112 findet ausgehend von dem ihm zugeführten Sensorreferenzgrößen deltaref bzw. ayref, der Referenzgröße omegaref, den gleich definierten Vergleichsgrößen omegadelta, omegakorr, omegaay sowie omeganij und der die Fahrzeuggeschwindigkeit repräsentierenden Größe vf eine Überwachung der Sensoren 102, 103 sowie 104 statt. Das Ergebnis der Überwachung wird mit Hilfe der Größe Fi ausgegeben, und einem Block 113 zugeführt. Die Größe Fi enthält dabei für jeden der genannten Sensoren eine Information darüber, ob der Sensor fehlerhaft ist oder nicht. Die Überwachung für die einzelnen Sensoren findet ausgehend von Plausibilitätsabfragen statt.

Der mit 113 bezeichnete Block stellt den Regler des Steuergerätes 101 dar. Dem Block 113 werden die Meßsignale deltamess, omegamess, aymess sowie nijmess zugeführt. Ferner erhält der Block 113, ausgehend vom Motor 115 ein Signal mot2, welches beispielsweise die Drehzahl des Motors beschreibt. Ferner erhält der Block 113, ausgehend von einem Block 114, welcher die Ansteuerlogik für die Aktuatoren 116ij und den Motor darstellt, Signale ST2 zugeführt. Bei diesen Signalen kann es sich beispielsweise um die Ansteuerzeiten Aij der Aktuatoren 116ij, welche insbesondere als Bremsen ausgebildet sind, handeln. Ausgehend von den Meßsignalen, den Signalen ST2 sowie unter Berücksichtigung der Größe Fi ermittelt der Regler 113 entsprechend der in ihm implementierten Regelung, Signale ST1, die der Ansteuerlogik 114 zugeführt werden. Wird dem Regler 113 durch das Signal Fi mitgeteilt, daß einer der Sensoren 102, 103 bzw. 104 fehlerhaft ist, so kann die Bildung der Signale ST1 modifiziert werden.

Im Block 114 werden ausgehend von den ihm zugeführten Signalen ST1 ein Ansteuersignal mot1 für den Motor 115 sowie Ansteuersignale Aij für die Aktuatoren 116ij ermittelt. Durch die entsprechende Ansteuerung des Motors 115 sowie der Aktuatoren 116ij, welche insbesondere als Bremsen ausgebildet sind, wird die Regelung einer die Fahrzeugbewegung repräsentierenden Bewegungsgröße realisiert. Mit den im Block 114 erzeugten Signalen ST2 wird dem Regler 113 beispielsweise der Zustand der Aktuatoren 116ij mitgeteilt.

**Patentansprüche**

1. Vorrichtung zur Überwachung von Sensoren in einem Fahrzeug, wobei die Sensoren Signale erzeugen, welche jeweils unterschiedliche physikalische Größen repräsentieren, die erste Mittel (106, 107, 108), enthält mit denen für wenigstens zwei Sensoren, ausgehend von wenigstens den von ihnen erzeugten Signalen Giergeschwindigkeiten ermitelt werden, **dadurch gekennzeichnet daß**, die Überwachungsvorrichtung zweite Mittel (111) enthält, mit denen ausgehend von wenigstens zwei der Giergeschwindigkeiten eine Referenzgröße ermittelt wird, die bei einer für wenigstens einen Sensor in dritten Mitteln (112) stattfindenden Überwachung berücksichtigt wird, wobei zur Bildung der Referenzgröße für jede der wenigstens zwei Giergeschwindigkeiten eine Größe ermittelt wird, die den Abstand der Giergeschwindigkeit zu den anderen Giergeschwindigkeiten der wenigstens zwei Giergeschwindigkeiten beschreibt, und dass die zweiten Mittel (112) dazu geeignet sind folgende Verfahrensschritte auszuführen :

   - für die Raddrehzahlsensoren wenigstens ausgehend von der die Fahrzeuggeschwindigkeit repräsentierenden Größe und den von ihnen erzeugten Signalen eine Giergeschwindigkeit omeganij zu ermitteln
   - für den Drehraten- bzw. Gierratensensor wenigstens ausgehend von dem von ihm erzeugten Signal und seiner Sensorreferenzgröße eine Giergeschwindigkeit omegakorr zu ermitteln
   - für den Querbeschleunigungssensor wenigstens ausgehend von dem von ihm erzeugten Signal, der die Fahrzeuggeschwindigkeit repräsentierenden Größe und seiner Sensorreferenzgröße eine Giergeschwindigkeit omegaay zu ermitteln
   - für den Lenkwinkelsensor wenigstens ausgehend von dem von ihm erzeugten Signal, der die Fahrzeuggeschwindigkeit repräsentierenden Größe und seiner Sensorreferenzgröße eine Giergeschwindigkeit omegadelta zu ermitteln

   und
   wobei die Referenzgröße gemäß der Beziehung

$$\text{omegaref} = \frac{\dfrac{\text{omegakorr}}{D12 \cdot D13 \cdot D14} + \dfrac{\text{omegadelta}}{D12 \cdot D23 \cdot D24} + \dfrac{\text{omeganij}}{D13 \cdot D23 \cdot D34} + \dfrac{\text{omegaay}}{D14 \cdot D24 \cdot D34}}{\dfrac{1}{D12 \cdot D13 \cdot D14} + \dfrac{1}{D12 \cdot D23 \cdot D24} + \dfrac{1}{D13 \cdot D23 \cdot D34} + \dfrac{1}{D14 \cdot D24 \cdot D34}}$$

   ermittelt wird, wobei die Ausdrücke

   D12 = |omegakorr - omegadelta| , D13 = |omegakorr - omeganij| ,
   D14 = |omegakorr - omegaay| , D23 = |omegadelta - omeganij| ,
   D24 = |omegadelta - omegaay| und D34 = |omeganij - omegaay|

   die Abstände jeweils zweier Giergeschwindigkeiten beschreiben.

**2.** Vorrichtung nach Anspruch 1, **dadurch gekennzeichnet, daß** ausgehend von einem Teil der mit Hilfe der Sensoren erzeugten Signale, welche jeweils unterschiedliche physikalische Größen repräsentieren, eine die Fahrzeuggeschwindigkeit repräsentierende Größe ermittelt wird, und

daß ausgehend von der die Fahrzeuggeschwindigkeit repräsentierenden Größe und der Referenzgröße für wenigstens einen Sensor eine Sensorreferenzgröße ermittelt wird, die bei der Überwachung des wenigstens einen Sensors berücksichtigt wird.

**3.** Vorrichtung nach Anspruch 2, **dadurch gekennzeichnet, daß** für wenigstens einen Sensor eine Korrektur des von ihm erzeugten Signals wenigstens ausgehend von seiner Sensorreferenzgröße und dem von ihm erzeugten Signal durchgeführt wird.

**4.** Vorrichtung nach Anspruch 1, **dadurch gekennzeichnet, daß** als Sensoren Raddrehzahlsensoren, ein Drehraten- bzw. Gierratensensor, ein Querbeschleunigungssensor und ein Lenkwinkelsensor vorgesehen sind.

**5.** Verfahren zur Überwachung von Sensoren in einem Fahrzeug, bei dem die Sensoren Signale erzeugen, welche jeweils unterschiedliche physikalische Größen repräsentieren,

bei dem für wenigstens zwei Sensoren, ausgehend von wenigstens den von ihnen erzeugten Signalen Giergeschwindigkeiten ermittelt werden, und **dadurch gekennzeichnet daß**,

bei dem ausgehend von wenigstens zwei der Giergeschwindigkeiten eine Referenzgröße ermittelt wird, die bei einer für wenigstens einen Sensor stattfindenden Überwachung berücksichtigt wird,

wobei zur Bildung der Referenzgröße für jede der wenigstens zwei Giergeschwindigkeiten eine Größe ermittelt wird, die den Abstand der Giergeschwindigkeit zu den anderen Giergeschwindigkeiten der wenigstens zwei Giergeschwindigkeiten beschreibt, und wobei:

- für die Raddrehzahlsensoren wenigstens ausgehend von der die Fahrzeuggeschwindigkeit repräsentierenden Größe und den von ihnen erzeugten Signalen eine Giergeschwindigkeit omeganij ermittelt wird,
- für den Drehraten- bzw. Gierratensensor wenigstens ausgehend von dem von ihm erzeugten Signal und seiner Sensorreferenzgröße eine Giergeschwindigkeit omegakorr ermittelt wird,
- wobei für den Querbeschleunigungssensor wenigstens ausgehend von dem von ihm erzeugten Signal, der die Fahrzeuggeschwindigkeit repräsentierenden Größe und seiner Sensorreferenzgröße eine Giergeschwindigkeit omegaay ermittelt wird,
- wobei für den Lenkwinkelsensor wenigstens ausgehend von dem von ihm erzeugten Signal, der die Fahrzeuggeschwindigkeit repräsentierenden Größe und seiner Sensorreferenzgröße eine Giergeschwindigkeit omegadelta ermittelt wird,

und
wobei die Referenzgröße gemäß der Beziehung

$$\text{omegaref} = \frac{\dfrac{\text{omegakorr}}{D12 \cdot D13 \cdot D14} + \dfrac{\text{omegadelta}}{D12 \cdot D23 \cdot D24} + \dfrac{\text{omeganij}}{D13 \cdot D23 \cdot D34} + \dfrac{\text{omegaay}}{D14 \cdot D24 \cdot D34}}{\dfrac{1}{D12 \cdot D13 \cdot D14} + \dfrac{1}{D12 \cdot D23 \cdot D24} + \dfrac{1}{D13 \cdot D23 \cdot D34} + \dfrac{1}{D14 \cdot D24 \cdot D34}}$$

ermittelt wird, wobei die Ausdrücke D12 = |omegakorr - omegadelta| , D13 = |omegakorr - omeganij| , D14 = |omegakorr - omegaay|, D23 = |omegadelta - omeganij|, D24 = |omegadelta - omegaay| und D34 = |omeganij - omegaay| die Abstände jeweils zweier Giergeschwindigkeiten beschreiben.

**Claims**

**1.** Device for monitoring sensors in a vehicle, wherein the sensors generate signals which each represent different physical variables,

which device contains first means (106, 107, 108) with which yaw speeds are determined for at least two sensors, on the basis of at least the signals which are generated thereby, **characterized in that** the monitoring device contains second means (111) with which a reference variable is determined on the basis of at least two of the yaw speeds, which reference variable is taken into account in monitoring which takes place for at least one sensor in third means (112), where, in order to form the reference variable for each of the at least two yaw speeds, a variable is determined which describes the distance between the yaw speed and the other yaw speeds of the at least two yaw speeds, and **in that** the second means (112) are suitable for carrying out the following method steps:

- of determining a yaw speed omeganij for the wheel speed sensors at least on the basis of the variable which represents the vehicle speed and the signals generated thereby,
- of determining a yaw speed omegakorr for the rotational speed sensor and/or yaw rate sensor at least on the basis of the signal generated thereby and its sensor reference variable,
- of determining a yaw speed omegaay for the lateral acceleration sensor at least on the basis of the signal generated thereby, the variable representing the vehicle speed and its sensor reference variable,
- of determining a yaw speed omegadelta for the steering angle sensor at least on the basis of the signal generated thereby, the variable representing the vehicle speed and its sensor reference variable,

and

wherein the reference variable is determined in accordance with the relationship

$$omegaref = \frac{\dfrac{omegakorr}{D12 \cdot D13 \cdot D14} + \dfrac{omegadelta}{D12 \cdot D23 \cdot D24} + \dfrac{omeganij}{D13 \cdot D23 \cdot D34} + \dfrac{omegaay}{D14 \cdot D24 \cdot D34}}{\dfrac{1}{D12 \cdot D13 \cdot D14} + \dfrac{1}{D12 \cdot D23 \cdot D24} + \dfrac{1}{D13 \cdot D23 \cdot D34} + \dfrac{1}{D14 \cdot D24 \cdot D34}}$$

where the expressions

D12 = |omegakorr - omegadelta| , D13 = |omegakorr - omeganij|,
D14 = |omegakorr - omegaay|, D23 = |omegadelta - omeganij| ,
D24 = |omegadelta-omegaay| and D34 = |omeganij - omegaay|

describe the distances between two yaw speeds in each case.

2. Device according to Claim 1, **characterized in that** a variable representing the vehicle speed is determined on the basis of some of the signals which are generated using the sensors and which each represent different physical variables, and
**in that** a sensor reference variable which is taken into account in the monitoring of the at least one sensor is determined on the basis of the variable representing the vehicle speed and the reference variable for at least one sensor.

3. Device according to Claim 2, **characterized in that**, for at least one sensor, a correction of the signal generated thereby is carried out at least on the basis of its sensor reference variable and the signal generated by said sensor.

4. Device according to Claim 1, **characterized in that** wheel speed sensors, a rotational speed sensor and/or yaw rate sensor, a lateral acceleration sensor and a steering angle sensor are provided as sensors.

5. Method for monitoring sensors in a vehicle, in which the sensors generate signals which each represent different physical variables,
in which, for at least two sensors, yaw speeds are determined on the basis of at least the signals which are generated thereby, and **characterized in that** in which, on the basis of at least two of the yaw speeds, a reference variable is determined which is taken into account in monitoring which takes place for at least one sensor,
wherein,
in order to form the reference variable for each of the at least two yaw speeds, a variable is determined which describes the distance between the yaw speed and the other yaw speeds of the at least two yaw speeds, and wherein:

- a yaw speed omeganij is determined for the wheel speed sensors at least on the basis of the variable which represents the vehicle speed and the signals generated thereby,
- a yaw speed omegakorr is determined for the rotational speed sensor and/or yaw rate sensor at least on the basis of the signal generated thereby and its sensor reference variable,

- wherein a yaw speed omegaay is determined for the lateral acceleration sensor at least on the basis of the signal generated thereby, the variable representing the vehicle speed and its sensor reference variable,
- wherein a yaw speed omegadelta is determined for the steering angle sensor at least on the basis of the signal generated thereby, the variable representing the vehicle speed and its sensor reference variable,

and
wherein the reference variable is determined in accordance with the relationship

$$omegaref = \frac{\dfrac{omegakorr}{D12 \cdot D13 \cdot D14} + \dfrac{omegadelta}{D12 \cdot D23 \cdot D24} + \dfrac{omeganij}{D13 \cdot D23 \cdot D34} + \dfrac{omegaay}{D14 \cdot D24 \cdot D34}}{\dfrac{1}{D12 \cdot D13 \cdot D14} + \dfrac{1}{D12 \cdot D23 \cdot D24} + \dfrac{1}{D13 \cdot D23 \cdot D34} + \dfrac{1}{D14 \cdot D24 \cdot D34}}$$

where the expressions

D12 = |omegakorr - omegadelta|, D13 = |omegakon - omeganij|,
D14 = |omegakorr - omegaay|, D23 = |omegadetta - omeganij| ,
D24 = |omegadelta - omegaay| and D34 = |omeganij - omegaay|

describe the distances between two yaw speeds in each case.

## Revendications

1. Dispositif de surveillance de détecteurs placés dans un véhicule, les détecteurs délivrant des signaux qui représentent chacun une grandeur physique différente,
le dispositif comprenant des premiers moyens (106, 107, 108) par lesquels les vitesses de lacet sont déterminées pour au moins deux détecteurs à partir d'au moins les signaux qu'ils délivrent,
**caractérisé en ce que**
le dispositif de surveillance comprend des deuxièmes moyens (111) par lesquels, partant d'au moins deux des vitesses de lacet, une grandeur de référence est déterminée et est prise en compte pour la surveillance d'au moins un détecteur dans des troisièmes moyens (112), une grandeur qui décrit l'écart entre la vitesse de lacet et les autres vitesses de lacet parmi les deux ou plusieurs vitesses de lacet étant déterminée pour former la grandeur de référence de chacune des deux ou plusieurs vitesses de lacet,
et **en ce que** les deuxièmes moyens (112) permettent d'exécuter les étapes de traitement suivantes :

- déterminer pour les détecteurs de vitesse de rotation des roues une vitesse de lacet omeganij au moins à partir de la grandeur qui représente la vitesse du véhicule et des signaux délivrés par ces détecteurs,
- déterminer une vitesse de lacet omegakorr pour le détecteur de vitesse de rotation ou de vitesse de lacet au moins à partir du signal qu'il délivre et de sa grandeur de référence de détecteur,
- déterminer une vitesse de lacet omegaay pour le détecteur d'accélération transversale au moins à partir du signal qu'il délivre, de la grandeur qui représente la vitesse du véhicule et de sa grandeur de référence de détecteur,
- déterminer une vitesse de lacet omegadelta pour le détecteur d'angle de braquage au moins à partir du signal qu'il délivre, de la grandeur qui représente la vitesse du véhicule et de sa grandeur de référence de détecteur,

et la grandeur de référence étant déterminée à partir de la relation :

$$omegaref = \frac{\dfrac{omegakorr}{D12 \cdot D13 \cdot D14} + \dfrac{omegadelta}{D12 \cdot D23 \cdot D24} + \dfrac{omeganij}{D13 \cdot D23 \cdot D34} + \dfrac{omegaay}{D14 \cdot D24 \cdot D34}}{\dfrac{1}{D12 \cdot D13 \cdot D14} + \dfrac{1}{D12 \cdot D23 \cdot D24} + \dfrac{1}{D13 \cdot D23 \cdot D34} + \dfrac{1}{D14 \cdot D24 \cdot D34}}$$

dans laquelle les expressions

D12 = |omegakorr-omegadelta|, D13 = |omegakorr-omeganij|
D14 = |omegakorr-omegaay|, D23 = |omegadelta-omeganij|,
D24 = |omegadelta-omegaay| et D34 = |omeganij-omegaay|

représentent les écarts entre deux vitesses de lacet respectives.

**2.** Dispositif selon la revendication 1, **caractérisé en ce qu'**une grandeur qui représente la vitesse du véhicule est déterminée à partir d'une partie des signaux formés à l'aide des détecteurs et qui représentent chacun une grandeur physique différente et **en ce qu'**une grandeur de référence de détecteur est déterminée à partir de la grandeur qui représente la vitesse du véhicule et de la grandeur de référence d'au moins un détecteur et est prise en compte lors de la surveillance du ou des détecteurs.

**3.** Dispositif selon la revendication 2, **caractérisé en ce que**, pour au moins un détecteur, une correction du signal qu'il délivre est réalisée au moins à partir de sa grandeur de référence de détecteur et du signal qu'il délivre.

**4.** Dispositif selon la revendication 1, **caractérisé en ce qu'**il présente comme détecteurs des détecteurs de vitesse de rotation des roues, un détecteur de vitesse de rotation ou de vitesse de lacet, un détecteur d'accélération transversale et un détecteur d'angle de braquage.

**5.** Procédé de surveillance de détecteurs placés dans un véhicule, dans lequel les détecteurs délivrent des signaux qui représentent chacun une grandeur physique différente et
dans lequel, pour au moins deux détecteurs, des vitesses de lacet sont déterminées à partir d'au moins les signaux qu'ils délivrent,
**caractérisé en ce**
**qu'**une grandeur de référence qui est prise en compte lors de la surveillance réalisée sur le ou les détecteurs est déterminée à partir d'au moins deux des vitesses de lacet,
une grandeur qui décrit l'écart entre la vitesse de lacet et les autres vitesses de lacet parmi les deux ou plusieurs vitesses de lacet étant déterminée pour former la grandeur de référence pour chacune des deux ou plusieurs vitesses de lacet, et
une vitesse de lacet omeganij étant déterminée pour les détecteurs de vitesse de rotation des roues au moins à partir de la grandeur qui représente la vitesse du véhicule et des signaux que ces détecteurs délivrent,
une vitesse de lacet omegakorr étant déterminée pour le détecteur de vitesse de rotation ou de vitesse de lacet au moins à partir du signal qu'il délivre et de sa grandeur de référence de détecteur,
une vitesse de lacet omegaay étant déterminée pour le détecteur d'accélération transversale au moins à partir du signal qu'il délivre, de la grandeur qui représente la vitesse du véhicule et de sa grandeur de référence de détecteur,
une vitesse de lacet omegadelta étant déterminée pour le détecteur d'angle de braquage au moins à partir du signal qu'il délivre, de la grandeur qui représente la vitesse du véhicule et de sa grandeur de référence de détecteur,
et la grandeur de référence étant déterminée à
partir de la relation

$$omegaref = \frac{\dfrac{omegakorr}{D12 \cdot D13 \cdot D14} + \dfrac{omegadelta}{D12 \cdot D23 \cdot D24} + \dfrac{omeganij}{D13 \cdot D23 \cdot D34} + \dfrac{omegaay}{D14 \cdot D24 \cdot D34}}{\dfrac{1}{D12 \cdot D13 \cdot D14} + \dfrac{1}{D12 \cdot D23 \cdot D24} + \dfrac{1}{D13 \cdot D23 \cdot D34} + \dfrac{1}{D14 \cdot D24 \cdot D34}}$$

dans laquelle les expressions

D12 = lomegakorr-omegadelta|, D13 = |omegakorr-omeganij|,
D14 = |omegakorr-omegaay|, D23 = |omegadelta-omeganij|,
D24 = |omegadelta-omegaay| et D34 = |omeganij-omegaaj|

représentent les écarts entre deux vitesses de lacet respectives.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Automobiltechnischen Zeitschrift (ATZ) 16. *FDR - die Fahrdynamikregelung von Bosch,* 1994, vol. 11, 674-689